# EUROPEAN PATENT APPLICATION

(11) **EP 1 712 281 A1**
(43) Date of publication of application: **18.10.2006**
(21) Application number: 05703740.0
(22) Date of filing: 17.01.2005
(51) Int. Cl.: B01J 38/56

(54) **METHOD OF REGENERATING HYDROGENATION CATALYST AND DIOLEFIN PURIFICATION PLANT**

(30) Priority: 20.01.2004 JP 2004012358
(71) Applicant: JSR Corporation, Tokyo 104-8410 (JP)
(72) Inventor: SUZUKI, Terutoshi, c/o JSR Corporation, Tokyo 1048410 (JP); HIRAI, Shigeo, c/o JSR Corporation, Tokyo 1048410 (JP)
(74) Representative: TBK-Patent
(86) International application number: PCT/JP2005/000503
(87) International publication number: WO 2005/068078

(57) **Abstract**

The invention aims to provide a method for regenerating a hydrogenation catalyst without using alkanes and a diolefin purification plant comprising an equipment which is used in this method and is simpler than ever. The first method comprises a contact step of contacting a composition for regeneration containing 50% by mass or more of an olefin having the carbon number of from 4 to 8 with the hydrogenation catalyst. The hydrogenation catalyst can be a hydrogenation catalyst used in hydrogenation of an acetylenic compound contained in a starting composition containing at least one diolefin having the carbon number of from 4 to 8. The second method comprises a contact step of contacting, with a hydrogenation catalyst, a raffinate obtained by separating, from a starting composition containing at least one diolefin having the carbon number of from 4 to 8, the diolefin. The hydrogenation catalyst can be a hydrogenation catalyst used in hydrogenation of the acetylenic compound contained in the starting composition. The plant comprises a hydrogenation catalyst regeneration equipment (1) conducting the regeneration method.

## Description

### Technical Field

The present invention relates to a method for regenerating a hydrogenation catalyst and a diolefin purification plant. More specifically, the invention relates to a method for regenerating a hydrogenation catalyst used in hydrogenation and a diolefin purification plant provided with hydrogenation catalyst regeneration apparatus for conducting the regeneration.

### Background Art

It has been well known that removal of acetylene is required during purification of diolefins. The removal of acetylene has been so far conducted by selectively hydrogenating by a hydrogenation catalyst acetylene contained in a starting composition while suppressing an influence on diolefins.
In the hydrogenation step, polymeric substances and the like are byproduced during hydrogenation of acetylene and become coatings that coat the catalyst to gradually deactivate the hydrogenation catalyst. However in industrial production requiring severe cost management, the hydrogenation catalyst has to be reused by regeneration.

A redox method has been so far used to regenerate the hydrogenation catalyst. That is, in this method, regeneration is conducted by repeating procedures of burning off adhered polymers at high temperatures (for example, 400°C) and then effecting reduction at high temperatures (for example, 200°C). However, this redox method involves (1) a problem that a life of the hydrogenation catalyst is shortened, (2) a problem that an energy cost for regeneration at high temperatures is high, (3) a problem that a regeneration furnace used for conducting redox at high temperatures is liable to damage, a life of the furnace is short and the cost is high, (4) an odor of exhaust gases discharged from the furnace is bad which is environmentally undesirable, and (5) a problem that safety is not satisfactory.

Meanwhile, for greatly improving the prior art, techniques disclosed in the following Patent Documents 1 and 2 have been known. These techniques are, unlike the redox method by heating at high temperatures, techniques of regenerating the hydrogenation catalyst in contact with alkanes having the carbon number of from 4 to 8 and hydrogen. These methods are excellent techniques capable of solving the problems (1) to (5) of the foregoing method.

Patent Document 1:JP-A-2001-58964
Patent Document 2: USP 6,512,151

### Disclosure of the Invention

### Problems that the Invention is to Solve

However, the techniques disclosed in Patent Documents 1 and 2 are problematic in that (1) costly alkanes have to be used, (2) when the alkanes are replaced with a starting composition after regeneration of the hydrogenation catalyst, the starting composition is incorporated into alkanes, and separation thereof is difficult, which incurs a great loss, and (3) a problem that a separation equipment for separating the same is required. Accordingly, in the techniques disclosed in Patent Documents 1 and 2, there is a problem that a relatively large plant installation having the separation equipment is needed.
The invention is to solve the foregoing problems, and it is an object of the invention to provide a method for regenerating a hydrogenation catalyst using olefins in which raffinates and the like are easily used, and a diolefin purification plant that conducts the regeneration.

### Means for Solving the Problems

The present inventors have studied the problems of the techniques disclosed in Patent Documents 1 and 2. In the foregoing techniques, the catalyst is contacted with hydrogen in addition to alkanes. However, the inventors have found that the contact with hydrogen is not altogether necessary. Further, it has been found quite unexpectedly that olefins, when substituted for alkanes, can be used with no problem. That is, the inventors have found that olefins can be used as a composition for regeneration. On the basis of these findings, the invention has been completed.

That is, the invention is as described below.
1. A method for regenerating a hydrogenation catalyst, which comprises a contact step of contacting a composition for regeneration containing 50% by mass or more of an olefin having the carbon number of from 4 to 8 with the hydrogenation catalyst.
2. The method for regenerating the hydrogenation catalyst as recited in 1, wherein the hydrogenation catalyst is a hydrogenation catalyst used in hydrogenation of an acetylenic compound contained in a starting composition containing at least one diolefin having the carbon number of from 4 to 8.
3. The method for regenerating the hydrogenation catalyst as recited in 2, wherein the composition for regeneration contains an olefin having the same carbon number as the diolefin.
4. The method for regenerating the hydrogenation catalyst as recited in 1, wherein the composition for regeneration has a sulfur content of 5 ppm or less and an acetylene content of 10 ppm or less.
5. The method for regenerating the hydrogenation catalyst as recited in 1, wherein the composition for regeneration contains one or plural olefins, and a boiling point at 1 atm of the olefin in the highest content among the olefins is from -20 to +50°C.
6. The method for regenerating the hydrogenation catalyst as recited in 2, wherein the diolefin is butadiene or isoprene.
7. The method for regenerating the hydrogenation catalyst as recited in 1, wherein in the contact step, a treating temperature is from 80 to 150°C, and a treating pressure is 50 kg/cm²G or less.
8. A method for regenerating a hydrogenation catalyst, which comprises a contact step of contacting, with the hydrogenation catalyst, a raffinate obtained by separating, from a starting composition containing at least one diolefin having the carbon number of from 4 to 8, the diolefin.
9. The method for regenerating the hydrogenation catalyst as recited in 8, wherein the hydrogenation catalyst is a hydrogenation catalyst used in hydrogenation of an acetylenic compound contained in the starting composition.
10. The method for regenerating the hydrogenation catalyst as recited in 8, wherein the raffinate contains an olefin having the same carbon number as the diolefin.
11. The method for regenerating the hydrogenation catalyst as recited in 8, wherein the raffinate has a sulfur content of 5 ppm or less and an acetylene content of 10 ppm or less.
12. The method for regenerating the hydrogenation catalyst as recited in 8, wherein the raffinate contains one or plural olefins, and a boiling point at 1 atm of the olefin in the highest content among the olefins is from -20 to +50°C.
13. The method for regenerating the hydrogenation catalyst as recited in 8, wherein the diolefin is butadiene or isoprene.
14. The method for regenerating the hydrogenation catalyst as recited in 8, wherein in the contact step, a treating temperature is from 80 to 150°C, and a treating pressure is 50 kg/cm²G or less.
15. A diolefin purification plant comprising a hydrogenation catalyst regeneration equipment which conducts a method for regenerating the hydrogenation catalyst comprising a contact step of contacting a composition for regeneration containing 50% by mass or more of an olefin having the carbon number of from 4 to 8 with the hydrogenation catalyst.
16. A diolefin purification plant comprising a hydrogenation catalyst regeneration equipment which conducts a method for regenerating a hydrogenation catalyst comprising a contact step of contacting, with the hydrogenation catalyst, a raffinate obtained by separating, from a starting composition containing at least one diolefin having the carbon number of from 4 to 8, the diolefin.

### Advantage of the Invention

According to a method for regenerating a hydrogenation catalyst in the first aspect of the invention, a composition for regeneration containing less costly olefins can be used as the composition for regeneration. Consequently, great cost reduction is enabled, and especially a raffinate generated as a residue after a diolefin is separated in a purification step can be used as the composition for regeneration. Further, the carbon number of the diolefin in the starting composition can be rendered equal to the carbon number of the olefin in the composition for regeneration, which is excellent in recyclability. Olefins (for example, butene) having a low boiling point and easy to separate are available. Since olefins having a low boiling point can be used, operation is possible in a mild environment (for example, 110°C and 25 kg/cm²G).

According to a method for regenerating a hydrogenation catalyst in the second aspect of the invention, a raffinate generated as a residue after separating the diolefin in a purification step can be used. For this reason, it is unnecessary to separately purchase or produce a composition for regeneration, which leads to great cost reduction. A raffinate after conducting a contact step can be reused without the need of separation from a starting composition incorporated. Accordingly, a hydrogenation catalyst regeneration equipment can be more simplified than ever, making it possible to greatly reduce the plant cost. Since a raffinate contains many olefins having a low boiling point, separation from catalyst coatings such as polymeric substances can easily be conducted. The raffinate is also recovered easily. Operation can be carried out in a mild environment (for example, 110°C and 25 kg/cm²G). That is, the use of the raffinate can greatly improve the energy efficiency. An environmental load can be much reduced too.

When the hydrogenation catalyst is a hydrogenation catalyst used in hydrogenation of the acetylenic compound contained in the starting composition, coatings (polymeric substances and the like) that coat the hydrogenation catalyst can easily be dissolved and removed with a predetermined composition for regeneration and a raffinate. It can be used in a purification step of diolefins or the like.
When the composition for regeneration or the raffinate contains an olefin having the same carbon number as the diolefin, reusability is quite excellent. Especially when a raffinate obtained from a starting composition containing a diolefin is used, its reusability is more increased.
When the composition for regeneration or the raffinate has a sulfur content of 5 ppm or less and an acetylene content of 10 ppm or less, regeneration of the hydrogenation catalyst can be performed stably over a long period of time surely, and less influences qualities of diolefins to be separated.
When the composition for regeneration or the raffinate contains one or plural olefins and a boiling point at 1 atm of the olefin in the highest content among the olefins is from -20 to +50°C, the hydrogenation catalyst can be regenerated efficiently and surely, and operation is possible in a mild environment.
When the diolefin is butadiene or isoprene, these diolefins especially useful industrially can be produced quite efficiently at low cost.
When a treating temperature is from 80 to 150°C and a treating pressure is 50 kg/cm²G or less in the contact step, the hydrogenation catalyst can be reproduced efficiently and surely, and operation is possible in a mild environment.

According to a diolefin purification plant of the invention, the composition for regeneration containing less costly olefins can be used as the regeneration composition, which leads to cost reduction. Especially when using a raffinate generated as a residue after separating the diolefin in the purification step, the cost is greatly reduced. The olefin having the same carbon number as the diolefin in the starting composition can be used as the composition for regeneration. Accordingly, reusability is excellent. In this case, separation from the starting composition is unnecessary, making it possible to simplify an a hydrogenation catalyst regeneration equipment more than ever and to reduce the plant cost. Olefins (for example, butene) having a low boiling point and easy to separate can be used. Operation is possible in a mild environment (for example, 110°C and 25 kg/cm²G).

### Brief Description of the Drawings

[Fig. 1] It is a diagrammatic view schematically showing a hydrogenation catalyst regeneration equipment in a diolefin purification plant of the invention.
[Fig. 2] It is a diagrammatic view schematically showing a diolefin purification plant of the invention.

### Description of Reference Numerals and Signs

1; hydrogenation catalyst regeneration equipment, 11; hydrogenation reactor, 12; reservoir, 13; temperature controller, 14; starting composition feeding line, 15; raffinate feeding line, 16; raffinate returning line, 2; diolefin purification plant, 21; hydrogenation reactor, 22; polymeric substance removal device, 23; diolefin separator, 24; hydrogen feeder, 25; starting composition feeder, 26, 27, 28; pipings.

### Best Mode for Carrying Out the Invention

The invention is described in detail below.
[1] Method for regenerating a hydrogenation catalyst using a composition for regeneration
A method for regenerating a hydrogenation catalyst in the first aspect of the invention comprises a contact step of contacting a composition for regeneration containing 50% by mass or more of an olefin having the carbon number of from 4 to 8 with the hydrogenation catalyst.

The "composition for regeneration" contains an olefin having the carbon number of from 4 to 8. Examples of the olefin include butene, pentene, hexene, heptene and octene. These olefins may be branched olefins or linear olefins. The position of the double bond is not limited. These olefins may be used either singly or in combination of two or more. That is, only an olefin having one carbon number (including, for example, an olefin having the carbon number of 4 only or an olefin having the carbon number of 5 only) may be used, and various olefins different in carbon number may be used by being mixed. Each of these olefins comprises only one of isomers thereof or two or more different isomers by mixing.
Examples of the butene include 1-butene and 2-butene. Examples of 1-butene include n-1-butene and iso-1-butene. Meanwhile, examples of 2-butene include trans-2-butene and cis-2-butene. These butenes may be branched butenes or linear butenes.
Examples of the pentene include 1-pentene, 2-pentene, and further isomers thereof. These pentenes may be branched pentenes or linear pentenes.
Examples of the hexene include 1-hexene, 2-hexene, 3-hexene and further isomers thereof. These hexenes may be branched hexenes or linear hexenes.
Examples of the heptene include 1-heptene, 2-heptene, 3-heptene and further isomers thereof. These heptenes may be branched heptenes or linear heptenes.
Examples of the octene include 1-octene, 2-octene, 3-octene, 4-octene and further isomers thereof. These octenes may be branched octenes or linear octenes.
The isomers of the various olefins may be used either singly or in combination of two or more.

The total amount of the olefins having the carbon number of from 4 to 8 is 50% by mass or more (preferably 70% by mass or more, more preferably 80% by mass or more, further preferably 90% by mass or more) based on the total composition for regeneration. When it is less than 50% by mass, a satisfactory regeneration effect of the hydrogenation catalyst is not obtained in conducting efficient operation.
When the content of the olefin having some carbon number among the olefins having the carbon number of from 4 to 8 is high, the reuse is easy, which is convenient. Specifically, for example, the content of the olefin having one carbon number (for example, the carbon number of 4 or 5) among the carbon numbers of from 4 to 8 is preferably 50% by mass ormore (preferably 70% by mass or more, more preferably 80% by mass or more, especially preferably 90% by mass or more, further preferably 100% by mass) based on the total olefins having the carbon number of from 4 to 8.
The carbon number of the olefin having one carbon number among the carbon numbers of from 4 to 8 is preferably from 4 to 6, more preferably 4 or 5. In this case, the olefins having these carbon numbers are excellent in removability of catalyst coatings such as polymeric substances, and the like and catalyst coatings and the like eluted in the composition for regeneration and the composition for regeneration are easily separated. Further, the composition for regeneration is easily recovered, and operation is possible in a mild environment.

The composition for regeneration may contain not only the olefins but also alkanes and the like. The type of the alkanes is not particularly limited. For example, alkanes having the carbon number of from 2 to 10 are mentioned. When isomers are present in these alkanes, the composition may contain only one of the isomers of the alkanes or two or more of the isomers by mixing.
The alkanes may be contained irrespective of the carbon number of the olefins in the composition for regeneration. However, it is preferable that the residue in which the olefin having one carbon number among the carbon numbers of from 4 to 8 is excluded from the composition for regeneration contains, as a main component, an alkane having the same carbon number as the olefin. In this case, since all or most of the hydrocarbons contained in the composition are hydrocarbons having the same carbon number, the fractions having the same carbon number are easily used, and easily treated because of a close boiling point.
In the composition for regeneration containing, as a main component, the olefin having one carbon number among the carbon numbers of from 4 to 8, it is preferable that an amount of a hydrocarbon having the larger carbon number than the carbon number of the olefin as the main component is preferably 10% by mass or less (more preferably 5% by mass or less; it may be 0% by mass) based on the total composition for regeneration.

When the hydrogenation catalyst is a hydrogenation catalyst used in hydrogenation of the acetylenic compound contained in the starting composition containing at least one diolefin having the carbon number of from 4 to 8, it is preferable that the composition for regeneration contains, as a main component, the olefin having the same carbon number as the diolefin contained in the starting composition. That is, when the diolefin in the starting composition is butadiene only or butadiene as a main component, it is preferable that the olefin in the composition for regeneration is butene as amain component. When the diolefin in the starting composition is isoprene only or isoprene as a main component, it is preferable that the olefin in the composition for regeneration is pentene as a main component. When the olefin having the same carbon number as the diolefin contained in the starting composition is a main component in the composition for regeneration, the starting composition, even when incorporated in the composition for regeneration, need not be separated, and reusability is thus excellent.
When the olefin having the same carbon number as the diolefin contained in the starting composition is a main component and the diolefin is 1, 3-butadiene, it is especially preferable that the olefin is at least one of iso-butene and n-butene as a main component. When the diolefin is isoprene, the olefin is preferably branched pentene, more preferably branched 1-pentene.

In the composition for regeneration, the content of the olefin having the carbon number of from 4 to 8 is 50% by mass or more. It is preferable that the content of the olefin having the carbon number of from 4 to 8 exceeds 50% by mass and the content of the alkane is less than 50% by mass. Accordingly, in the formulation of the composition for regeneration, for example, the content of the olefin having the carbon number of from 4 to 8 can be from 60 to 100% by mass (preferably from 80 to 97% by mass), the content of the alkane from 0 to 40% by mass (preferably from 3 to 20% by mass), and the content of the diolefin from 0 to 5% by mass (preferably 2% by mass or less) respectively.

The acetylene content in the composition for regeneration is preferably 10 ppm or less (more preferably 5 ppm or less, further preferably 1 ppm or less). The sulfur content in the composition for regeneration is preferably 5 ppm or less (more preferably 3 ppm or less, further preferably 1 ppm or less). Accordingly, it is preferable that in the composition for regeneration the sulfur content is 5 ppm or less and the acetylene content is 10 ppm or less. It is more preferable that the sulfur content is 3 ppm or less and the acetylene content is 5 ppm or less. It is especially preferable that the sulfur content is 1 ppm or less and the acetylene content is 1 ppm or less.

It is preferable that the composition for regeneration has, as a whole, a low boiling point. That is, it is preferable that, for example, a maximum peak {maximum peak in a correlation of a temperature (abscissa) and a fraction amount (ordinate)} of a boiling point at 1 atm (1.033 kg/cm²) of the composition for regeneration is from -20 to +50°C. The boiling point at 1 atm of the composition for regeneration is preferably 50°C or less (more preferably 40°C or less, further preferably 10°C or less, usually -50°C or more).
When the maximum peak of the boiling point at 1 atm of the composition for regeneration or the boiling point at 1 atm of the composition for regeneration is in this range, the recovery, separation or the like of the composition for regeneration can easily be conducted.

It is preferable that the composition for regeneration contains one or plural olefins, and the boiling point at 1 atm of the olefin in the highest content among the olefins is from -20 to +50°C. In the use of this composition for regeneration, the olefin having the lower boiling point than an n-alkane ordinarily used is employed as a main component. Accordingly, the separation of the catalyst coatings such as polymeric substances, or the like and the composition for regeneration is easily conducted in comparison to the alkanes. The composition for regeneration is also easily recovered in comparison to the alkanes. Operation is possible in a mild environment in comparison to the alkanes. The foregoing boiling points are all values at 1 atm.

The composition for regeneration may contain other hydrocarbons in addition to the olefins and the alkanes. Examples of the other hydrocarbons include (1) diolefins (especially diolefins having the carbon number of from 4 to 8), an olefin having the carbon number of 3 (propene), olefins having the carbon number of 9 or more, and derivatives thereof, and (2) derivatives of olefins having the carbon number of from 4 to 8, and the like. The content thereof is not particularly limited. It is usually less than 50% by mass based on the total composition for regeneration. Examples of the derivatives include halosubstituted derivatives and the like.

The "hydrogenation catalyst" is a catalyst used in hydrogenation of hydrocarbons having an unsaturated bond (including aromatic series and the like; hydrocarbons are commonly used) and derivatives thereof (for example, alkyne derivatives). Accordingly, this hydrogenation catalyst is coated with polymeric substances and the like byproduced during the hydrogenation. A substance to be hydrogenated with the hydrogenation catalyst is not particularly limited. It is usually an acetylenic compound (for example, acetylene or methylacetylene), an olefinic compound (olefins having the carbon number of from 2 to 8 or the like, provided at least one olefin is left). Further, the acetylenic compound contained in the starting composition is mentioned.
The hydrogenation catalyst may be a single substance or a composite substance. The single substance is a hydrogenation catalyst comprising a component having a catalytic activity only (hereinafter simply referred to as a "catalyst component"). The composite substance is a hydrogenation catalyst comprising the catalyst component and a carrier carrying the catalyst component.
The catalyst component is not particularly limited. That is, examples thereof include various transition metals, compounds thereof and the like. Examples of the transition metals include copper, platinum, palladium, manganese, cobalt, nickel, chromium, molybdenum, alloys thereof and the like. Compounds of the transition metals include chlorides and the like. These may be used either singly or in combination of two or more. Among these transition metals, compounds of the transition metals and the like, at least transition metals including copper and/or compounds thereof are preferable.
Meanwhile, the carrier is not particularly limited, so long as it can carry the catalyst component. That is, examples thereof include alumina, zeolite, silica and the like. The shape (for example, spherical, columnar or tubular) and the state (for example, porous or non-porous) of the carrier are not particularly limited either. These may be used either singly or in combination of two or more.

The "contact step" is a step of contacting the composition for regeneration with the hydrogenation catalyst. The conditions for the "contact" are not particularly limited. The treating temperature in the contact is preferably from 50 to 200°C (more preferably from 80 to 150°C, further preferably from 90 to 130°C). When the treating temperature is within this range, the regeneration efficiency of the hydrogenation catalyst can be improved.
The treating pressure in the contact is preferably 50 kg/cm²G or less (more preferably 40 kg/cm²G or less, further preferably 30 kg/cm²G or less, usually 5 kg/cm²G or more). By the way, "G" in "kg/cm²G" of the treating pressure means a gauge pressure, which applies to the following.
The composition for regeneration is usually a gas at normal temperature and normal pressure. However, the state thereof in the contact step is not particularly limited, and it may be a liquid, a gas or a gas-liquid mixture. Of these, a liquid or a gas-liquid mixture is preferable. Accordingly, the composition can be rendered closer to a liquid or a gas-liquid mixture by pressurizing.
These treating temperatures and treating pressures may be used in combination. That is, for example, it is preferable that the treating temperature is from 50 to 200°C and the treating pressure is 50 kg/cm²G or less. It is more preferable that the treating temperature is from 80 to 150°C and the treating pressure is 40 kg/cm²G or less. It is especially preferable that the treating temperature is from 90 to 130°C and the treating pressure is 30 kg/cm²G or less.

The composition for regeneration, after undergoing the contact step, can be recycled for reuse in the contact step. Further, the composition for regeneration can be reused in the contact step by being mixed with the composition for regeneration that has already undergone the contact step. The composition for regeneration may be used by being mixed with the starting composition. Moreover, after undergoing the contact step, the composition for regeneration may be withdrawn outside the system.

[2] Method for regenerating a hydrogenation catalyst using a raffinate
In the regeneration of the hydrogenation catalyst, a raffinate containing olefins having the carbon number of from 4 to 8 can widely be used. The origin of the raffinate is not particularly limited, and raffinates obtained in petroleum chemical purification, natural gas purification and the like are mentioned. Of these, a raffinate obtained such that from a starting composition containing at least one diolefin having the carbon number of from 4 to 8, the diolefin is separated can be used.
That is, a method for regenerating a hydrogenation catalyst in the second aspect of the invention comprises a contact step of contacting, with the hydrogenation catalyst, a raffinate obtained by separating, from a starting composition containing at least one diolefin having the carbon number of from 4 to 8, the diolefin.

The "starting composition" contains at least one diolefin having the carbon number of from 4 to 8. That is, it is, for example, a so-called C4 fraction, C5 fraction, C6 fraction, C7 fraction or C8 fraction. In each of these C4 to C8 fractions, the component having the predetermined carbon number is usually contained in an amount of 80% by mass or more. That is, in the C4 fraction, the component having the carbon number of 4 (for example, butadiene, butene or butane) can be contained in an amount of 80% by mass or more based on the total C4 fraction. Of these C4 to C8 fractions, the C4 to C6 fractions are preferable, and the C4 and C5 fractions are especially preferable. That is, for example, the C4 fraction contains butadiene, and the C5 fraction contains isoprene.

The content of the diolefin contained in the starting composition is not particularly limited. The starting composition contains a diolefin having one carbon number among diolefins having the carbon numbers of 4 to 8. It is especially preferable that the composition little contains diolefins having the other carbon numbers.
The starting composition usually contains hydrocarbons except the diolefin, having the same carbon number as the diolefin, or hydrocarbons except the diolefin, having the carbon number different from that of the diolefin. Examples of these hydrocarbons include olefins and alkanes.

Further, the starting composition usually contains an acetylenic compound. The "acetylenic compound" refers to acetylene and/or derivatives thereof. This acetylenic compound is usually contained inevitably in the starting composition, and removed by being converted to olefins through hydrogenation before a step of separating the diolefin (removal includes reduction of a concentration of the acetylenic compound or disappearance thereof). The content of the acetylenic compound is not particularly limited either.

The "raffinate" is a residue obtained by separating the diolefin having the carbon number of from 4 to 8 from the starting composition. In this case, the degree of the "separation" is not particularly limited. That is, the "separation" includes not only a case in which the diolefin having the carbon number of from 4 to 8 is completely separated from the starting composition by the separation step but also a case in which the diolefin having the carbon number of from 4 to 8 is partially separated by the separation step but still remains in the starting composition.
The composition of the raffinate is not particularly limited, but the raffinate usually contains an olefin having the carbon number of from 4 to 8 as a main component. The content of the olefin having the carbon number of from 4 to 8 is not particularly limited. It is preferably 50% by mass of more based on the total raffinate. To this olefin (type, content and the like), the description on the olefin in the first aspect of the invention can directly be applied.
This olefin is preferably the olef in having the same carbon number as the diolefin contained in the starting composition. This is usually the same with the raffinate. Further, in the raffinate, the olefin having the same carbon number is usually employed as a main component (usually 50% by mass or more, preferably 60% by mass or more, more preferably 70% by mass or more, especially preferably 80% by mass or more based on the total raffinate). This is because the raffinate is a residue of the starting composition. Accordingly, when the raffinate is used and the starting composition is incorporated therein, it can be returned to a cracking step or the like as the starting composition without the need of separation.

This raffinate can be a raffinate in which the total amount of the olefin (for example, butene) exceeds 50% by mass and the alkane is contained in an amount of less than 50% by mass. In this raffinate, for example, the amount of the olefin can be from 60 to 100% by mass (preferably from 80 to 97% by mass), the amount of the alkane from 0 to 40% by mass (preferably from 3 to 20% by mass), and the amount of the diolefin from 0 to 5% by mass (preferably 2% by mass or less) respectively. The alkane is preferably an alkane having the same carbon number as the olefin in the raffinate.
In the raffinate containing an olefin having one carbon number among the carbon numbers of from 4 to 8, an amount of a hydrocarbon having the larger carbon number than that of the olefin as the main component is preferably 10% by mass or less (more preferably 5% by mass or less; it may be 0% by mass) based on the total raffinate.

An acetylene content of the raffinate is preferably 10 ppm or less (more preferably 5 ppm or less, further preferably 1 ppm or less). A sulfur content of the raffinate is preferably 5 ppm or less (more preferably 3 ppm or less, further preferably 1 ppm or less). Accordingly, it is preferable that in the raffinate the sulfur content is 5 ppm or less and the acetylene content is 10 ppm or less. It is more preferable that the sulfur content is 3 ppm or less and the acetylene content is 5 ppm or less. It is especially preferable that the sulfur content is 1 ppm or less and the acetylene content is 1 ppm or less.
An extraction solvent which is used to extract the diolefin in the raffinate varies with a purification process. Usually, it includes N-methylpyrrolidone (NMP), dimethylformamide (DMF), acetonitrile (ACN), furfural and the like. It is preferable that the content of the extraction solvent in the raffinate is low.

It is preferable that the raffinate has, as a whole, a low boiling point. That is, it is preferable that, for example, a maximum peak {maximum peak in a correlation of a temperature (abscissa) and a fraction amount (ordinate)} of a boiling point at 1 atm is from -20 to +50°C. The boiling point at 1 atm of the raffinate is preferably 50°C or less (more preferably 40°C or less, further preferably 10°C or less, usually -50°C or more). When the maximum peak of the boiling point at 1 atm of the raffinate or the boiling point at 1 atm thereof is in this range, the recovery, separation or the like of the raffinate can easily be conducted.

When the raffinate contains one or plural olefins (usually plural olefins), it is preferable that the boiling point at 1 atm of the olefin having the maximum content among the olefins is from -20 to +50°C. In the use of this raffinate, the olefin having the lower boiling point than an n-alkane ordinarily used is employed as a main component.
That is, for example, in a raffinate which is a residue obtained by separating 1,3-buteiene from the C4 fraction, the olefin in the highest content is usually iso-butene, and its boiling point is -65°C. In a raffinate which is a residue obtained by separating isoprene from the C5 fraction, the olefin in the highest content is usually iso-penten, and its boiling point is from 20.1 to 32°C. These boiling points are much lower than the boiling point of 69°C of n-hexane which is a typical alkane disclosed in Patent Documents 1 and 2. Accordingly, separation of coatings such as polymeric compounds (for example, a boiling point at 1 atm of a typical coating is 200°C) and the raffinate is easy in comparison to alkanes. Further, recovery of the raffinate is easy in comparison to alkanes. Moreover, operation is possible in a mild environment in comparison to alkanes. By the way, the boiling points are values at 1 atm.

The raffinate may contain other hydrocarbons in addition to the olefins and the alkanes. Examples of the other hydrocarbons include (1) diolefins (especially diolefins having the carbon number of from 4 to 8), an olefin having the carbon number of 3 (propene), olefins having the carbon number of 9 or more, and derivatives thereof; and (2) derivatives of olefins having the carbon number of from 4 to 8. The content thereof is not particularly limited. It is usually less than 50% by mass based on the total raffinate. The derivatives are, for example, halosubstituted derivatives and the like.

The "hydrogenation catalyst" is a catalyst used in hydrogenation of hydrocarbons having an unsaturated bond, derivatives thereof and the like (including aliphatic series, aromatic series and the like). Accordingly, the hydrogenation catalyst is usually coated with polymeric substances and the like byproduced during the hydrogenation. A substance to be hydrogenated with the hydrogenation catalyst is not particularly limited. For example, an acetylenic compound is mentioned. Further, the acetylenic compound contained in the starting composition is mentioned.
The hydrogenation catalyst may be a single substance or a composite substance. The single substance is a hydrogenation catalyst comprising a component having a catalytic activity only (hereinafter simply referred to as a "catalyst component"). The composite substance is a hydrogenation catalyst comprising the catalyst component and a carrier carrying the catalyst component.
The catalyst component is not particularly limited. That is, examples thereof include various transition metals, compounds thereof and the like. Examples of the catalyst component, especially the catalyst component suitable for hydrogenation of the acetylenic compound include copper, platinum, palladium, manganese, cobalt, nickel, chromium, molybdenum, compounds thereof and the like. These may be used either singly or in combination of two or more. Of these, the catalyst component containing at least copper is preferable.
Meanwhile, the carrier is not particularly limited, so long as it can carry the catalyst component. That is, examples thereof include alumina, zeolite, silica and the like. The shape (for example, spherical, columnar or tubular) and the state (for example, porous or non-porous) of the carrier are not particularly limited. These may be used either singly or in combination of two or more.

Especially when the hydrogenation catalyst is a hydrogenation catalyst used in hydrogenation of the acetylenic compound contained in the starting composition, the raffinate can be used to regenerate the hydrogenation catalyst in a diolefin purification plant. As a result, the plant can be operated quite efficiently. That is, according to the method of the invention, the raffinate which has been so far returned to a cracking step, used as a fuel or discarded can be used to regenerate the hydrogenation catalyst in the plant. The raffinate, after the contact step, can be recycled for reuse in the contact step. This raffinate can be reused by being mixed with the raffinate which has undergone the contact step. Further, the raffinate may be used as a starting composition by being mixed with the starting composition. Moreover, after the contact step, the raffinate may be withdrawn outside the system, and used as a fuel or discarded as in the past.
To the "contact step", the description on the contact step in the first aspect of the invention can directly be applied.

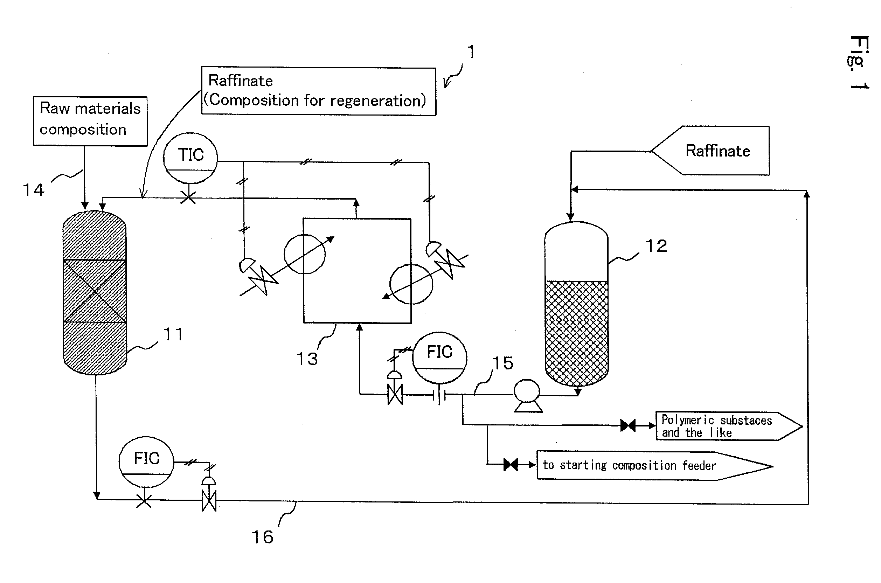

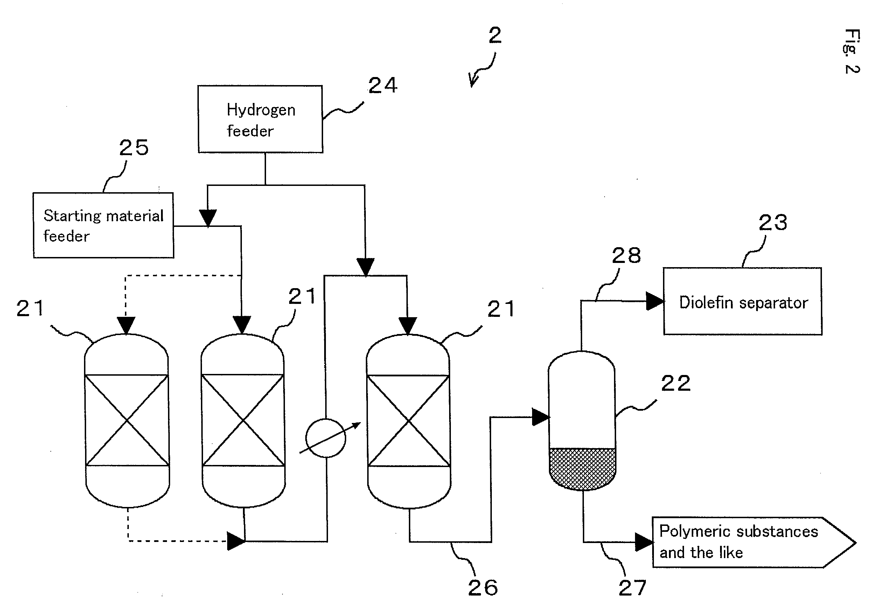

[2] Diolefin purification plant
The diolefin purification plant of the invention comprises a hydrogenation catalyst regeneration equipment which conducts the method for regenerating the hydrogenation catalyst in the invention.
The diolefin purification plant (2) comprises, as shown in, for example, Fig. 2, a hydrogenation reactor (21), a polymeric substance removal device (22) for removing a polymeric substance from a reaction product obtained by a hydrogenation reaction with the hydrogenation reactor (21), a diolefin separator (23) for separating the diolefin from a gaseous component separated from the polymeric substance removal device (22), and the like. Further, this diolefin purification plant (2) comprises a hydrogenation catalyst regeneration equipment for regenerating the hydrogenation catalyst charged in the hydrogenation reactor (21) and coated with a polymeric substance and the like by the hydrogenation reaction (refer to Fig. 1).

To the hydrogenation reactor (21), a predetermined starting composition containing a diolefin (for example, a butadiene-containing C4 fraction, an isoprene-containing C5 fraction or the like which contains a small amount of acetylene) is fed from a starting composition feeder (24) as required. Further, hydrogen is fed thereto from a hydrogen feeder (25) as required, and the catalyst is charged therein. The number of the hydrogenation reactor (21) is usually plural. For example, three or four hydrogenation reactors are mounted in combination. This hydrogenation reactor (21) is not particularly limited so long as it can conduct the hydrogenation reaction to remove the acetylenic compound. Various known hydrogenation reactors are available.

The polymeric substance removal device (22) is connected with the hydrogenation reactor (21) via a piping (26). In the polymeric substance removal device (22), a high-boiling polymeric substance is separated from below via a piping (27), and a hydrocarbon gas and a liquid ingredient having a low boiling point (usually desired diolefins are contained in large amounts and monoolefins, saturated hydrocarbons and the like are further contained) are separated from above via a piping (28). This polymeric substance removal device (22) is not particularly limited so long as a predetermined polymeric substance and the like to be separated and removed can be separated from a low-boiling mixture of diolefins, monoolefins and the like. Various known removal devices are available.

The diolefin separator (23) is one which is connected with the polymeric substance removal device (22) via the piping (28) for separating the diolefin from a mixed gas and a liquid ingredient containing a large amount of the diolefin. This separator is not particularly limited so long as it can conduct separation {for example, solvent extraction (with an extraction solvent such as NMP, DMF or ACN)} of the diolefin. Various known separators are available.

The hydrogenation catalyst regeneration equipment is an equipment for regenerating a spent hydrogenation catalyst. The hydrogenation catalyst regeneration equipment is not particularly limited so long as a polymeric substance and the like which coat the hydrogenation catalyst can be dissolved and removed with a predetermined hydrocarbon component. Various known equipments are available.
For example, the hydrogenation catalyst regeneration equipment (1) comprises, as shown in Fig. 1, a hydrogenation reactor (11; 21 in Fig. 2) which is charged with a spent hydrogenation catalyst and dissolves a coating, and a reservoir (12) of a composition for regeneration (or a raffinate) mounted via a piping (16) behind the hydrogenation reactor. As to the hydrogenation reactor (11), the hydrogenation reactor (11) in the diolefin purification plant which is filled with the spent hydrogenation catalyst is commonly used as such. For example, in three hydrogenation reactors (21) shown in Fig. 2, one reactor in which the piping is shown by a broken line is off-line, and this off-line hydrogenation reactor (21) is used as a part of the hydrogenation catalyst regeneration equipment.

The reservoir (12) of the composition for regeneration (or the raffinate) is not particularly limited so long the composition for regeneration (or the raffinate) which dissolves a catalyst coating such as a high-molecular compound being a polymeric substance can be stored therein. This reservoir (12) is preferably a reservoir which stores only the composition for regeneration (or the raffinate) separated from the mixture containing the catalyst coating or the like and the composition for regeneration (or the raffinate). This reservoir (12) may be one containing both of the catalyst coating or the like and the composition for regeneration (or the raffinate). In this case, a separation unit or the like for separating them is mounted therebehind.
Usually, the composition for regeneration (or the raffinate) after separation is introduced into the hydrogenation reactor (11) which dissolves the catalyst coating, and the separation gas and the like are recycled (refer to Fig. 1). Further, as shown in Fig. 1, this reservoir (12) may be replenished with other fresh raffinate gases (fractions having the same carbon number).

### Example

The invention is illustrated specifically below by referring to this Example. By the way, the invention is not limited at all to Example.
[1] Hydrogenation catalyst regeneration equipment
Fig. 1 is a diagrammatic view schematically showing a hydrogenation catalyst regeneration equipment (1) mounted in a butadiene purification plant.
The hydrogenation catalyst regeneration equipment (1) is provided with the hydrogenation reactor (11) with a volume of 46 m³ in which 20 tons of a hydrogenation catalyst (total amount of a catalyst component and a carrier having the catalyst component carried thereon) for hydrogenating acetylene is accommodated. Further, the hydrogenation catalyst regeneration equipment (1) has a reservoir (12) for storing the raffinate. In this reservoir (12), the 20 m³ of raffinate obtained by separating butadiene from the starting composition is stored at a pressure of 30 kg/cm²G. The reservoir (12) is connected with the hydrogenation reactor (11) by a raffinate feeding line (15) via a temperature controller (13) for controlling the temperature of the raffinate. The hydrogenation reactor (11) is connected with the reservoir (12) by a raffinate returning line (16) for returning the raffinate contacted with the hydrogenation catalyst in the hydrogenation reactor (11) to the reservoir (12). Further, the hydrogenation reactor (11) is connected with a starting composition feeding line (14), through which the starting composition can be fed into the hydrogenation reactor (11).

[2] Composition of a raffinate
The composition of the raffinate stored in the reservoir (12) is as follows.
Composition of the raffinate
- iso-butane: 3.18% by mass
- n-butane: 6.44% by mass
- n-1-butene: 28.12% by mass
- iso-1-butene: 44.18% by mass
- trans-2-butene: 9.22% by mass
- cis-2-butene: 7.46% by mass
- others: 1.40% by mass
Further, in the raffinate, a sulfur content is 1 ppm or less, an acetylene content 5 ppm or less , a TBC (t-butylcathecol) content 5 ppm or less, a carbonyl content 5 ppm, and an NMP (N-methylpyrrolidone) content 5 ppm or less respectively.

[3] Regeneration of a hydrogenation catalyst
A starting composition containing approximately 1% by mass of acetylene based on the total starting composition and butadiene is passed through the hydrogenation reactor (11) for 4 months, and the starting composition feeding line (14) for feeding the starting composition to the hydrogenation reactor (11) is then stopped. In this manner, the hydrogenation catalyst which is coated with a polymeric substance and the like to decrease the catalytic activity is regenerated according to the following (1) to (5).
(1) The starting composition remaining within the hydrogenation reactor (11) is replaced with the raffinate fed from the reservoir (12) via the raffinate feeding line (15) using a nitrogen pressure.
(2) Then, the raffinate is circulated between the hydrogenation reactor (11) and the reservoir (12) at a flow rate of 40 tons/hr via the raffinate feeding line (15) and the raffinate returning line (16).
(3) Subsequently, the heating is started such that the temperature of the raffinate fed to the hydrogenation reactor (11) reaches 110°C with a temperature controller (13). The raffinate heated to 110°C is circulated between the hydrogenation reactor (11) and the reservoir (12) over 20 hours to contact the raffinate with the hydrogenation catalyst coated with the polymeric substance and the like. At this time, the treating temperature in the hydrogenation reactor (11) is 110°C, and the treating pressure therein is 25 kg/cm²G.
(4) After the circulation is conducted for 20 hours, the temperature of the raffinate being circulated is decreased to 25°C with the temperature controller (13). When the total raffinate reaches 25°C, the raffinate feeding line (15) is closed to stop the circulation of the raffinate.
(5) Thereafter, the starting composition feeding line (14) is opened to discharge the raffinate in the hydrogenation reactor (11) via the raffinate returning line (16) using a hydrogen pressure. The starting composition is charged into the hydrogenation reactor (11) to replace the raffinate with the starting composition.
(6) This regeneration treatment is completed in 48 hours.

[4] Effects of Example
A process in which butadiene is purified from the starting composition in the hydrogenation reactor (11) charged with the hydrogenation catalyst regenerated in [3] is conducted. Consequently, the regenerated hydrogenation catalyst is good in catalytic activity, and can be used without problem. That is, it has been found that the regeneration of the hydrogenation catalyst is conducted quite efficiently using the less costly raffinate which is the residue obtained by separating the diolefin from the starting composition. The starting composition is incorporated in the raffinate in the step (5) of [3]. However, this raffinate need not be separated from the starting composition, and it can be reused in the regeneration of a hydrogenation catalyst coated with a polymeric substance and the like in another hydrogenation reactor.

Incidentally, the invention is not limited to the foregoing specific Example, and Examples which are modified within the scope of the invention according to purposes and applications can also be provided.
Various modifications of the invention are possible according to purposes and applications, though not included in the invention. That is, for example, the contact step of the invention may be employed in regeneration of a hydrogenation catalyst used in a purification step for purifying diolefins having the carbon number of 9 or more. Likewise, a hydrogenation catalyst regeneration equipment used for this purpose may be installed in a plant.

### Industrial Applicability

The method for regenerating the hydrogenation catalyst in the invention has found wide acceptance in regeneration of the hydrogenation catalyst. The method for regenerating the hydrogenation catalyst in the invention can be used especially in regeneration of the hydrogenation catalyst of the acetylenic compound. Moreover, the method for regenerating the hydrogenation catalyst in the invention can be used in the purification plant of diolefins (butadiene, isoprene and the like).

## Claims

1. A method for regenerating a hydrogenation catalyst, which comprises a contact step of contacting a composition for regeneration containing 50% by mass or more of an olefin having the carbon number of from 4 to 8 with the hydrogenation catalyst.

2. The method for regenerating the hydrogenation catalyst as claimed in claim 1, wherein the hydrogenation catalyst is a hydrogenation catalyst used in hydrogenation of an acetylenic compound contained in a starting composition containing at least one diolefin having the carbon number of from 4 to 8.

3. The method for regenerating the hydrogenation catalyst as claimed in claim 2, wherein the composition for regeneration contains an olefin having the same carbon number as the diolefin.

4. The method for regenerating the hydrogenation catalyst as claimed in claim 1, wherein the composition for regeneration has a sulfur content of 5 ppm or less and an acetylene content of 10 ppm or less.

5. The method for regenerating the hydrogenation catalyst as claimed in claim 1, wherein the composition for regeneration contains one or plural olefins, and a boiling point at 1 atm of the olefin in the highest content among the olefins is from -20 to +50°C.

6. The method for regenerating the hydrogenation catalyst as claimed in claim 2, wherein the diolefin is butadiene or isoprene.

7. The method for regenerating the hydrogenation catalyst as claimed in claim 1, wherein in the contact step, a treating temperature is from 80 to 150°C, and a treating pressure is 50 kg/cm²G or less.

8. A method for regenerating a hydrogenation catalyst, which comprises a contact step of contacting, with the hydrogenation catalyst, a raffinate obtained by separating, from a starting composition containing at least one diolefin having the carbon number of from 4 to 8, the diolefin.

9. The method for regenerating the hydrogenation catalyst as claimed in claim 8, wherein the hydrogenation catalyst is a hydrogenation catalyst used in hydrogenation of an acetylenic compound contained in the starting composition.

10. The method for regenerating the hydrogenation catalyst as claimed in claim 8, wherein the raffinate contains an olefin having the same carbon number as the diolefin.

11. The method for regenerating the hydrogenation catalyst as claimed in claim 8, wherein the raffinate has a sulfur content of 5 ppm or less and an acetylene content of 10 ppm or less.

12. The method for regenerating the hydrogenation catalyst as claimed in claim 8, wherein the raffinate contains one or plural olefins, and a boiling point at 1 atm of the olefin in the highest content among the olefins is from -20 to +50°C.

13. The method for regenerating the hydrogenation catalyst as claimed in claim 8, wherein the diolefin is butadiene or isoprene.

14. The method for regenerating the hydrogenation catalyst as claimed in claim 8, wherein in the contact step, a treating temperature is from 80 to 150°C, and a treating pressure is 50 kg/cm²G or less.

15. A diolefin purification plant comprising a hydrogenation catalyst regeneration equipment which conducts a method for regenerating a hydrogenation catalyst comprising a contact step of contacting a composition for regeneration containing 50% by mass or more of an olefin having the carbon number of from 4 to 8 with the hydrogenation catalyst.

16. A diolefin purification plant comprising a hydrogenation catalyst regeneration equipment which conducts a method for regenerating a hydrogenation catalyst comprising a contact step of contacting, with the hydrogenation catalyst, a raffinate obtained by separating, from a starting composition containing at least one diolefin having the carbon number of from 4 to 8, the diolefin.
